# EUROPEAN PATENT SPECIFICATION

(11) **EP 2 940 088 B1**
(45) Date of publication and mention of the grant of the patent: **02.08.2017**
(21) Application number: 14756302.7
(22) Date of filing: 26.02.2014
(51) Int. Cl.: C09D 133/04, C09D 4/02, C09D 201/00, C08J 5/18, C09D 153/00, C09D 183/12, C09D 4/06, C08F 2/48, C08F 222/10

(54) **COATING COMPOSITION, AND PLASTIC FILM PREPARED THEREFROM**
BESCHICHTUNGSZUSAMMENSETZUNG UND DARAUS HERGESTELLTER KUNSTSTOFFFILM
COMPOSITION D'ENDUIT ET FILM PLASTIQUE PRÉPARÉ À PARTIR DE CELLE-CI

(30) Priority: 26.02.2013 KR 20130020650; 26.02.2013 KR 20130020652; 25.02.2014 KR 20140022023
(43) Date of publication of application: 04.11.2015
(73) Proprietor: LG Chem, Ltd., Seoul 150-721 (KR)
(72) Inventor: KANG, Joon Koo, Daejeon 305-738 (KR); CHANG, Yeong Rae, Daejeon 305-738 (KR); JUNG, Soon Hwa, Daejeon 305-738 (KR); BYUN, Jin-seok, Daejeon 305-738 (KR)
(74) Representative: Goddar, Heinz J.
(86) International application number: PCT/KR2014/001579
(87) International publication number: WO 2014/133319

(56) References cited:
- WO-A1-2008/082257
- KR-A- 20070 054 625
- KR-A- 20090 056 913
- KR-A- 20100 121 281
- KR-B1- 0 163 760
- KR-B1- 101 226 379
- US-A1- 2008 283 415
- US-A1- 2009 171 302

## Description

### BACKGROUND OF THE INVENTION

### (a) Field of the Invention

The present invention relates to a coating composition and a plastic film prepared therefrom. More particularly, the present invention relates to a coating composition as a material for a plastic film with high hardness, high impact resistance and excellent properties, and a plastic film prepared therefrom.

### (b) Description of the Related Art

With the advance of mobile appliances such as smart phones, tablet PCs and the like, substrates for displays have recently been required to become lighter and slimmer. Display windows or front panels of such mobile appliances are generally made of glass or reinforced glass both of which have excellent mechanical properties. However, glass suffers from the disadvantage of being heavy and being easily broken by an external impact.

As an alternative to glass, plastic resin films have emerged. Their light weight and resistance to impact are consistent with the trend of pursuing lighter and slimmer mobile appliances. Particularly, a film with high hardness and wear resistance is required. In this regard, it is proposed to utilize a structure in which the substrate is coated with a coating layer.

First of all, increasing the thickness of the coating layer is considered as an approach to improving the surface hardness thereof. In fact, the coating layer should be of a minimal thickness to ensure the surface hardness of the coating layer. As the coating layer increases in thickness, the surface hardness thereof may become higher. However, a thicker coating layer, although increasing the surface hardness, is more prone to setting shrinkage which leads to wrinkling or curling with the concomitant production of cracks or exfoliations, and thus thick coating layers are difficult to employ in practice.

Recently, some methods have been proposed for conferring a high hardness on plastic films, without the problems of cracking and setting shrinkage-induced curling.

Korean Patent Application Publication No. 2010-0041992 discloses a plastic film composition, free of monomers, comprising a binder resin based on ultraviolet-curable polyurethane acrylate oligomers. However, this plastic film has a pencil hardness of about 3H, and thus the strength thereof is not sufficient to be a substitute for glass panels for displays.

### SUMMARY OF THE INVENTION

Accordingly, the present invention has been made keeping in mind the above problems occurring in the prior art, and is intended to provide a coating composition suitable as a material for plastic films which are high enough in hardness to substitute for glass and which exhibit excellent physical properties such as hardness, impact resistance, and toughness, without the problems of curling and cracking, and a plastic film prepared therefrom.

In accordance with an aspect thereof, the present invention provides a coating composition comprising a binder, an amphipathic block copolymer, an inorganic fine particle, a photoinitiator, and an organic solvent.

In accordance with another aspect thereof, the present invention provides a plastic film, comprising:
a support substrate; and
a coating layer formed on at least one side of the support substrate, comprising a photocrosslinked copolymer, an inorganic fine particle dispersed in the photocrosslinked copolymer, and an amphipathic block copolymer.

Prepared from the coating composition of the present invention, the plastic film for use as a substitute for glass panels is remarkably superior to conventional resin-based plastic films in terms of hardness and impact resistance and exhibits high scratch resistance and transparency.

In addition, the plastic film of the present invention is characterized by high processability and can be usefully applied to mobile appliances, display instruments, and front panels and display windows of various instruments.

### DETAILED DESCRIPTION OF THE EMBODIMENTS

The coating composition of the present invention comprises a binder, an amphipathic block copolymer, an inorganic fine particle, a photoinitiator, and an organic solvent.

The plastic film of the present invention comprises:
a support substrate; and
a coating layer formed on at least one side of the support substrate, comprising a photocrosslinked copolymer, an inorganic fine particle dispersed in the photocrosslinked copolymer, and an amphipathic block copolymer.

The following detailed descriptions of embodiments of the invention are not intended to be exhaustive or to limit the invention to the precise form disclosed below. While specific embodiments of, and examples for the invention are described below for illustrative purposes, various equivalent modifications are possible within the scope of the invention, as those skilled in the relevant art will recognize.

Below, a detailed description will be given of the coating composition and the plastic film according to the present invention.

### Coating Composition

The coating composition of the present invention comprises a binder, an amphipathic block copolymer, an inorganic fine particle, a photoinititator, and an organic solvent.

As used herein, the term "binder" refers to a monomer, an oligomer, or a polymer which can be polymerized to a polymer or a copolymer by UV light.

In one embodiment of the present invention, the binder may include an acrylate monomer. In detail, the binder may include a tri- to hexafunctional acrylate monomer.

The term "acrylate-based," as used herein, is intended to encompass acrylate, methancrylate, and derivatives thereof with various substituents.

The binder may include a tri- to hexafunctional acrylate monomer. Examples of the tri to hexafunctional acrylate monomer include, but are not limited to, trimethylolpropane triacrylate (TMPTA), trimethylolpropane ethoxy triacrylate (TMPEOTA), glycerin-propoxylated triacrylate (GPTA), pentaerythritol tetraacrylate (PETA), and dipentaerythritol hexaacrylate (DPHA). These tri- to hexafunctional acrylate monomers may be used alone or in combination.

When irradiated with UV light, the tri- to hexafunctional acrylate monomers may be crosslinked with each other, or with other binder components to form a photocrosslinked copolymer which confers a high hardness on the coating layer thereof.

According to one embodiment of the present invention, the binder may be used in an amount of approximately 45 to 85 weight parts, or approximately 50 to 80 weight parts, based on 100 weight parts of a solid component of the coating composition. When used in such amounts, the binder can endow the plastic film with good physical properties such as high hardness, impact resistance, scratch resistance, etc.

The coating composition of the present invention comprises an amphipathic block copolymer.

As used herein, the term "amphipathic block copolymer" means a copolymer simultaneously containing blocks miscible and immiscible with the binder within one molecule. For example, the amphipathic block copolymer may contain blocks which are respectively miscible and immiscible with a tri-to hexafunctional acrylate monomer, if present in the coating composition, within one molecule. When the coating composition comprises two or more kinds of binders, the amphipathic copolymer may contain both blocks miscible and immiscible with a predominant one of the binders.

In one embodiment wherein the coating composition comprises a tri- to hexafunctional monomer as a binder, the miscible block of the amphipathic copolymer may contain repeat units exhibiting high affinity for or compatibility with the tri- to hexafunctional acrylate monomer. The miscible block may contain at least one selected from among polyethylene oxide (PEO), polypropylene oxide (PPO), polymethyl acrylate (PMA), polymethyl methacrylate (PMMA), polycaprolactone (PCL), polystyrene (PS), and polyacrylic acid (PAA), but is not limited thereto. The affinity or compatibility may be expressed as a solubility parameter with regard to the reference binder, serving as a criterion to determine whether the block is miscible or immiscible with the binder.

In the coating composition comprising a tri- to hexafunctional acrylate monomer as a binder, the immiscible block may have repeat units which are poor in affinity for or compatibility with the tri- to hexafunctional acrylate monomer. Examples of the immiscible block include polypropylene oxide (PPO), polybutylene oxide (PBO), polyhexilene oxide (PHO), polybutadiene (PB), polydimethyl siloxane (PDMS), polybutyl acrylate (PBA), and polyalkyl (meth)acrylate (PAMA) containing alkyl of 2 to 10 carbon atoms, but are not limited thereto.

In the amphipathic block copolymer, the ratio of the miscible to the immiscible block is not specifically limited. For instance, the ratio of miscible to immiscible block may range in volume fraction from approximately 5:95 to approximately 95:5, or from approximately 3: 7 to approximately 7:3, or from approximately 4:6 to approximately 6:4.

According to one embodiment of the present invention, the amphipathic block copolymer may be a linear multiblock copolymer, such as a di-, tri- or tetrablock copolymer, or may have a branched or three-dimensional multiblock structure. No particular limitations are imposed on the structure of the amphipathic block copolymer. If the amphipathic block copolymer is of di-block structure, it may have a repeat unit of -MI- or -IM- in which a miscible block (M) alternates with an immiscible block (I). In an amphipathic tri-block copolymer, there are repeat units of -MIM- or -IMI- wherein an immiscible block (I) is repetitively sandwiched between miscible blocks (M) or *vice versa.*

According to one embodiment of the present invention, the amphipathic block copolymer may have a number average molecular weight of approximately 1,000 to approximately 100,000 g/mol or approximately 2,000 to approximately 50,000 g/mol.

Containing both blocks miscible and immiscible with the binder of the coating composition, the amphipathic block copolymer exhibits a self-assembly behavior. In the course of mixing of the amphipathic block copolymer with other components of the coating composition, a spherical or sphere-like micelle forms an aggregate with the miscible blocks in contact with the surrounding binder, sequestering the immiscible blocks in the micelle center. The micelle may preferably have a diameter of approximately 100 nm or less, for example, approximately 5 to approximately 100 nm. For example, when the diameter exceeds 100 nm, the micelle may have a negative optical influence on the coating layer, deteriorating the transparency of the film.

As described above, the coating composition comprising the amphipathic block copolymer increases toughness and impact resistance in the coating layer without deteriorating mechanical properties. Particularly, the amphipathic block copolymer exists in the form of a micelle in a self assembly manner in which the miscible blocks face externally toward the binders of the coating composition, so that the amphipathic block copolymer serves as an absorber of external impacts. Accordingly, the coating layer comprising the amphipathic block copolymer can be reinforced with impact resistance and compatibility, without sacrificing mechanical properties such as pencil hardness.

According to one embodiment of the present invention, the amphipathic block copolymer may be used in an amount of approximately 0.1 to approximately 30 weight parts, or approximately 0.5 to approximately 20 weight parts, based on 100 weight parts of a solid component of the coating composition. When used in such amounts, the amphipathic block copolymer can endow the plastic film with good physical properties such as impact resistance and compatibility, without deteriorating mechanical properties.

The coating composition of the present invention may comprise an inorganic fine particle.

In one embodiment of the present invention, the inorganic fine particles may be nano-sized. For example, they may have a diameter of approximately 100 nm or less, or approximately 10 to approximately 100 nm, or approximately 10 to approximately 50 nm. As the inorganic fine particles, for example, silica particles, aluminum oxide particles, titanium oxide particles, or zinc oxide particles may be employed. The inorganic fine particles may exist as a dispersed form in the binder, such as a tri- to hexafuctional acrylate monomer.

The inorganic fine particles can further reinforce the hardness of the plastic film.

According to one embodiment of the present invention, the inorganic fine particle may be used in an amount of approximately 10 to approximately 40 weight parts, or approximately 10 to approximately 30 weight parts, based on 100 weight parts of a solid component of the coating composition. When used in such amounts, the inorganic fine particle can endow the plastic film with good physical properties.

The coating composition of the present invention may comprise a photoinititator.

Examples of the photoinitiator useful in the present invention include, but are not limited to, 1-hydroxy-cyclohexyl-phenyl ketone, 2-hydroxy-2-methyl-1-phenyl-1-propanone, 2-hydroxy-1-[4-(2-hydroxyethoxy)phenyl]-2-methyl-1-propanone, methylbenzoylformate, α,α-dimethoxy-α-phenylacetophenone, 2-benzoyl-2-(dimethylamino)-1-[4-(4-morpholinyl)phenyl]-1-butanone, 2-methyl-1-[4-(methylthio)phenyl]-2-(4-morpholinyl)-1-propanone diphenyl(2,4,6-trimethylbenzoyl)-phosphine oxide, and bis(2,4,6-trimethylbenzoyl)-phenylphosphine oxide. In addition, it may be commercially available under the trade name of, for example, Irgacure 184, Irgacure 500, Irgacure 651, Irgacure 369, Irgacure 907, Darocur 1173, Darocur MBF, Irgacure 819, Darocur TPO, Irgacure 907, or Esacure KIP 100F. These different photoinitiators may be used alone or in combination.

According to one embodiment of the present invention, the photoinitiator may be used in an amount of approximately 0.5 to approximately 10 weight parts, or approximately 1 to approximately 5 weight parts, based on 100 weight parts of a solid component of the coating composition. When used in such amounts, the photoinitiator allows for sufficient photopolymerization, without deteriorating physical properties of the plastic film.

According to one embodiment of the present invention, the coating composition comprises an organic solvent to exert proper fluidity and coatability.

In the coating composition according to one embodiment of the present invention, the organic solvent may be used in such an amount that the weight ratio of the solid component of the coating composition to the organic solvent ranges from approximately 70 : 30 to approximately 99 : 1.

In one embodiment of the present invention, the organic solvent may be selected from among alcohol solvents, such as methanol, ethanol, isopropyl alcohol, and butanol; alkoxy alcohol solvents, such as 2-methoxyethanol, 2-ethoxyethanol, and 1-methoxy-2-propanol; ketone solvents, such as acetone, methylethylketone, methylisobutyl ketone, methylpropyl ketone, and cyclohexanone; ether solvents, such as propylene glycol monopropylether, propyleneglycol monomethyl ether, ethylene glycol monethylether, ethyleneglycol monopropylether, ethyleneglycolmonobutylether, diethyleneglycolmonomethylether, diethylglycolmonoethyl ether, diethylglycolmonopropylether, diethylglycolmonobutylether, diethyleneglycol-2-ethylhexyl ether; aromatic solvents, such as benzene, toluene, and xylene; and a combination thereof.

No particular limitations are imposed on the viscosity of the coating composition when it exhibits suitable fluidity and coatability. For example, the coating composition may have a viscosity of approximately 100 to approximately 1,200 cps, approximately 150 to approximately 1,200 cps, or approximately 300 to approximately 1,200 cps at 25°C.

Meanwhile the coating composition of the present invention may include a typical additive such as a surfactant, a yellowing inhibitor, a leveling agent, an antifouling agent. In addition to the binder, the amphipathic block copolymer, the inorganic fine particle, the photoinitoator and the organic solvent. Here, the content of the additive may be variously adjusted to the degree that the physical properties of the composition of the present invention are not degraded. Its content is not particularly limited, but preferably ranges from approximately 0.1 to approximately 10 weight parts, based on 100 weight parts of the solid component of the coating composition.

According to an embodiment of the present invention, for example, the coating composition may include a surfactant as an additive. The surfactant may be a mono- or bi-functional fluorine acrylate, a fluorine surfactant, or a silicon surfactant. In this context, the surfactant may be contained in a dispersed or crosslinked form in the photocrosslinked copolymer.

Further, a yellowing inhibitor may be used as an additive. The yellowing inhibitor may be a benzophenone compound or a benzotriazole compound.

A coating layer may be formed by photocuring the coating composition comprising the aforementioned components after the coating composition is applied to the substrate.

Another aspect of the present invention addresses a plastic film, comprising: a support substrate; and a coating layer formed on at least one side of the support substrate, including a photocrosslinked copolymer, an inorganic fine particle dispersed in the photocrosslinked copolymer, and an amphipathic block copolymer.

So long as it is transparent, any plastic resin may be used for the substrate on which a coating layer is formed, without limitations imposed thereto. According to an embodiment of the present invention, the substrate may be made of, for example, a polyester such as polyethyleneterephtalate (PET), a polyethylene such as ethylene vinyl acetate (EVA), cyclic olefin polymer (COP), cyclic olefin copolymer (COC), polyacrylate (PAC), polycarbonate (PC), polyethylene (PE), polymethylmethacrylate (PMMA), polyetheretherketon (PEEK), polyethylenenaphthalate (PEN), polyetherimide (PEI), polyimide (PI), triacetylcellulose (TAC), MMA (methyl methacrylate), or a fluoro-polymer. The substrate may be a single layer structure, and, if necessary, may be a multilayer structure including two or more layers composed of the same or different materials, but is not particularly limited.

According to an embodiment of the present invention, the substrate may be a multilayered substrate made of polyethyleneterephthalate (PET) or co-extruded polymethylmethacrylate (PMMA)/polycarbonate (PC).

Further, according to an embodiment of the present invention, the substrate may include a copolymer of polymethylmethacrylate (PMMA) and polycarbonate (PC).

The substrate may range in thickness from approximately 30 to approximately 1,200 µm, or from approximately 50 to approximately 800 µm, but is not limited thereto.

As described above, the plastic film of the present invention comprises a support substrate with first and second hard coating layers formed on opposite surfaces of the substrate, respectively.

The plastic film of the present invention comprises a coating layer formed on at least one side of the support substrate, the coating layer comprising a photocrosslinked copolymer, an inorganic fine particle dispersed in the photocrosslinked copolymer, and an amphipathic block copolymer.

According to an embodiment of the present invention, the thickness ratio of the support substrate to the coating layer formed on one surface of the substrate may be approximately 1: 0.5 to approximately 1: 2, or approximately 1: 0.5 to approximately 1: 1.5. When the thickness ratio thereof is within the above range, a plastic film can be formed which exhibits high hardness without being prone to curling or cracking.

The plastic film of the present invention can be obtained by applying a coating composition comprising a binder, an amphipathic block copolymer, an inorganic fine particle, a photoinitiator, and an organic solvent to at least one side of the support substrate, and photocuring the coating composition to form a coating layer. That is, the coating composition comprises a binder, an amphipathic block copolymer, an inorganic fine particle, a photoinitiator, and an inorganic solvent, and is photocured to form a coating layer which thus comprises a photocrosslinked copolymer, an inorganic fine particle dispersed in the photocrosslinked copolymer, and an amphipathic block copolymer. The components of the coating composition are as described above.

Any method that is available in the art can be used in the application of the first hard coating composition without particular limitations. For example, the hard coating composition may be applied by bar coating, knife coating, roll coating, blade coating, die coating, micro-gravure coating, comma coating, slot die coating, lip coating and solution casting. After being completely cured, the coating layer has a thickness of approximately 50 µm or higher, for example, approximately 50 to approximately 300 µm, approximately 50 to approximately 200 µm, approximately 50 to approximately 150 µm, or approximately 70 to approximately 150 µm. According to the present invention, a plastic film of high hardness can be prepared without the formation of curls or cracks even when the coating layer is formed to the above thickness.

In accordance with one embodiment, the plastic film of the present invention may further comprise at least one layer, membrane or film, such as a plastic resin film, an adhesive film, an releasable film, an electrically conductive film, an electrically conductive layer, a coating layer, a curable resin layer, a non-conductive film, a metal mesh layer, or patterned metal layer, on the coating layer formed on the substrate. In addition, the layer, membrane or film may take any form such as a monolayer, a bilayer or a lamination. The layer, membrane or film may be constructed on the coating layer by, but not limited to, laminating a freestanding film with the aid of an adhesive or an adhesive film, or by coating, deposition, or sputtering.

In accordance with one embodiment of the present invention, the coating layer is formed only on one side of the support substrate.

In accordance with one embodiment of the present invention, the coating layer is formed on both sides of the support substrate.

When the coating layer is formed on both sides, the coating composition may be applied onto the front and back sides of the support substrate in a sequential or simultaneous manner.

According to one embodiment of the present invention, a first coating composition is applied to one side of the support substrate and photocured, after which a second coating composition is subsequently applied to the other side of the support substrate and photocured. In this context, the first and the second coating compositions are the same as the coating composition and are just terminologically discriminated for application to opposite respective sides of the substrate.

Any method that is available in the art can be used in the application of the first and the second coating composition without particular limitations. For example, the coating composition may be applied by bar coating, knife coating, roll coating, blade coating, die coating, micro-gravure coating, comma coating, slot die coating, lip coating, solution casting. In the first and the second photocuring step, UV radiation may be emitted at a dose of approximately 20 to approximately 600 mJ/cm², or approximately 50 to approximately 500 mJ/cm². Any light source that is used in the art can be applied to the present invention without particular limitation. For example, a high-pressure mercury lamp, a metal halide lamp, a black light fluorescent lamp or the like may be used. The photocuring may be carried out by irradiating UV light at the dose for approximately 30 sec to approximately 15 min, or for approximately 1 to approximately 10 min.

After being completely cured, the first and the second coating layer may have a thickness of approximately 50 to approximately 300 µm, approximately 50 to approximately 200 µm, approximately 50 to approximately 150 µm, or approximately 70 to approximately 150 µm.

In the second photocuring step of the above-illustrated process, UV light is irradiated to a surface opposite to that coated with the first coating composition. Thus, the curl which may be generated by setting shrinkage in the first photocuring step is counterbalanced to afford a flat hard coating film. No additional flattening processes are thus needed.

According to one embodiment of the present invention, the first photocuring step after application of the first coating composition to one side of the support substrate may be performed until the binder contained in the first coating composition is partially crosslinked. The term "partially crosslinked," as used herein, may be expressed as a crosslink degree over 0 % and less than 100 %, as compared to the complete crosslink set as 100 %. For example, the first photocuring step may be carried out to the degree that the photocurable functional group of the binder contained in the first coating composition is crosslinked by approximately 30 to approximately 60 mol %, or by approximately 40 to approximately 50 mol %.

Partial crosslinking, instead of complete crosslinking, of the binder may bring about an improvement in the setting shrinkage of the first coating composition, conferring excellent physical and optical properties as well as high hardness on the plastic film without generating curls or cracks. The binder which remains uncured in the first coating composition may be crosslinked in the second photocuring step.

In an embodiment of the present invention, the plastic film comprises a first coating layer formed on one side of the support substrate, and a second coating layer formed on the other side of the support substrate, the first coating layer comprising a photocrosslinked copolymer, an inorganic fine particle dispersed in the photocrosslinked copolymer, and an amphipathic block copolymer, the second coating layer comprising a photocrosslinked copolymer and an amphipathic block copolymer. Like this, a composition difference between the first and the second coating layers may compensate for insufficient properties which may occur in one of the compositions. For example, the first coating layer comprising a photocrosslinked copolymer, an inorganic fine particle dispersed in the photocrosslinked copolymer, and an amphipathic block copolymer exhibits high hardness while the second coating layer comprising a photocrosslinked copolymer and an amphipathic block copolymer is responsible for impact resistance and processability.

For use as a cover for mobile terminals or tablet PCs, the plastic film must have hardness or impact resistance elevated sufficiently to be a substitute for glass. Even when formed at a high thickness on the substrate, the coating layer of the present invention is less prone to curling or cracking, and imparts the hard coating film with high transparency and impact resistance.

The plastic film according to the present invention is superior in hardness, scratch resistance, transparency, durability, light resistance, and light transmittance.

In one embodiment of the present invention, when the plastic film of the present invention is disposed on a plane after exposure to a temperature of 50°C or higher at a humidity of 80% or higher for 70 hrs, the maximum distance at which each edge or side of the hard coating film is spaced apart from the plane may be approximately 1.0 mm or less, approximately 0.6 mm or less, or approximately 0.3 mm or less. More particularly, when the plastic film of the present invention is disposed on a plane after exposure to a temperature of 50°C to 90°C at a humidity of 80% to 90 % for 70 to 100 hrs, each edge or side of the plastic film is spaced apart from the plane by approximately 1.0 mm or less, approximately 0.6 mm or less, or approximately 0.3 mm or less, maximally.

Exhibiting excellent physical properties including hardness, scratch resistance, impact resistance, transparency, durability, light resistance, and light transmittance, the plastic film of the present invention has useful applications in various fields.

The plastic film of the present invention exhibits superiority in terms of impact resistance and hardness, compared to glass panels or plastic films containing UV-crosslinked copolymers only. For example, the plastic film of the present invention may not crack even after a steel bead weighing 22 g is freely dropped ten times from a height of 50 cm thereto.

In addition, the plastic film of the present invention may have a pencil hardness of 7H or more, 8H or more, or 9H or more at a load of 1 kg.

Further, after the plastic film of the present invention is tested by double rubbing 400 times with a steel wool #0000 under a load of 500 g on a friction tester, only two or less scratches may appear.

The plastic film of the present invention may have a light transmittance of 92.0% or more, and a haze of 1.0% or less, 0.5% or less, or 0.4% or less.

Further, the plastic film of the present invention may have an initial color b value of 1.0 or less. After the hard coating film is exposed to UV-B under an ultraviolet lamp for 72 hrs or more, it may have a color b* value which differs from the pre-exposed color b* value by 0.5 or less, or by o.4 or less.

As described above, the plastic film of the present invention can be applied to various fields. For example, the plastic film of the present invention can be used in touch panels of mobile terminals, smart phones or tablet PCs, and cover or device panels of various displays.

A better understanding of the present invention may be obtained through the following examples which are set forth to illustrate, but are not to be construed as limiting the present invention.

### <EXAMPLES>

### Preparation of Amphipathic Block Copolymer

### PREPARATION EXAMPLE 1: PEO-PDMS-PEO (polyethylene oxide-polydimethyl siloxane-polyethylene oxide) Block Copolymer

A PEO-PDMS-PEO block copolymer was prepared from polyethylene oxide and polydimethyl siloxane by a coupling reaction. The block copolymers had a volume ratio of PEO : PDMS : PEO of 1:2:1 and a number average molecular weight of approximately 4,000 g/mol. In addition, the PEO-PDMS-PEO block copolymers aggregated by self assembly to form micelle structures with an average diameter of approximately 8 nm.

### PREPARATION EXAMPLE 2: PDMS-PMMA (polydimethyl siloxane-polymethyl methacrylate) Block Copolymer

A PDMS-PMMA block copolymer was prepared from polydimethyl siloxane and polymethyl methacrylate by atomic transfer radical polymerization (ATRP). The block copolymers had a volume ratio of PMMA: PDMS of 1:1, and a number average molecular weight of approximately 23,000 g/mol. In addition, the PDMS-PMMA block copolymers aggregated by self assembly to form micelle structures with an average diameter of approximately 18 nm.

### PREPARATION EXAMPLE 3: PMMA-PB-PS (polymethyl methacrylate-polybutadiene-polystyrene) Block Copolymer

A PMMA-PB-PS block copolymer was prepared from polymethyl methacrylate, polybutadiene, and polystyrene by atomic transfer radical polymerization. The block copolymers had a volume ratio of PMMA : PB : PS of 32:34:34, and a number average molecular weight of approximately 50,000 g/mol. In addition, the PMMA-PB-PS block copolymers aggregated by self assembly to form micelle structures with an average diameter of approximately 25 nm.

### PREPARATION EXAMPLE 4: PEO-PPO-PEO (polyethylene oxide-polypropylene oxide-polyethylene oxide) Block Copolymer (Number Average Mw : 30,000 g/mol)

A PEO-PPO-PEO block copolymer was prepared from polyethylene oxide, and polypropylene oxide by atomic transfer radical copolymerization. The block copolymers had a volume ratio of PEO : PPO : PEO of 1:2:1, and a number average molecular weight of approximately 30,000 g/mol. In addition, the PDMS-PMMA block copolymers aggregated by self assembly to form micelle structures with an average diameter of approximately 15 nm.

### PREPARATION EXAMPLE 5: PMMA-PBA (polymethyl methacrylate-polybutyl acrylate) Block Copolymer

A PMMA-PBA block copolymer was prepared from polymethyl methacrylate and polybutyl acrylate by RAFT (reversible addition fragment chain transfer) polymerization. The block copolymers had a volume ratio of PMMA : PBA of 1:1, and a number average molecular weight of approximately 29,000 g/mol. In addition, the PDMS-PMMA block copolymers aggregated by self assembly to form micelle structures with an average diameter of approximately 15 nm.

### PREPARATION EXAMPLE 6: PDMS-PMMA (polydimethyl siloxane-Polymethyl methaceylate) Block Copolymer

A PDMS-PMMA block copolymer was prepared from polydimethyl siloxane and polymethyl methacrylate by atomic transfer radical copolymerization. The block copolymers had a volume ratio of PMMA: PDMS of 1:1, and a number average molecular weight of approximately 30,000 g/mol. In addition, the PDMS-PMMA block copolymers aggregated by self assembly to form micelle structures with an average diameter of approximately 23 nm.

### Preparation of Plastic Film

### EXAMPLE 1

A first coating composition was prepared by mixing 8 g of a pentaerythritol tetraacrylate (PETA) composite in which nano-silica with a diameter of 20 ∼ 30 nm was dispersed by approximately 20 weight % (silica 1.6g, PETA 6.4g), 2 g of the PEO-PDMS-PEO block copolymer of Preparation Example 1, 0.1 g of a photoinititator (brand name: Irgacure 819), 0.1g of a benzotriazole-based yellowing inhibitor (brand name: Tinuvin 400), 0.05 g of a fluorine surfactant (brand name: F477), and 2 g of methylethyl ketone.

A second coating composition was prepared by mixing 7 g of trimethylol propane triacrylate (TMPTA), 3 g of the PEO-PDMS-PEO block copolymer of Preparation Example 1, 0.1 g of a photoinitiator (brand name: Irgacure 819), 0.1 g of benzotriazole-based yellowing inhibitor (brand name: Tinuvin 400), 0.05 g of a fluorine surfactant (brand name: F477), and 2 g of methylethyl ketone.

The first coating composition was applied to a PET support substrate 188 µm thick with a size of 15 cm x 20 cm, and then subjected to first photocuring by exposure to 280 ∼ 350 nm UV light.

Subsequently, the second coating composition was applied to the back side of the support substrate, and then exposed to 280 ∼ 350 nm UV light to give a plastic film. After completion of this second photocuring, each of the coating layers formed on both sides of the substrate was 80 µm thick.

### EXAMPLE 2

A plastic film was prepared in the same manner as in Example 1, with the exception that the first coating composition employs 2 g of the PDMS-PMMA block copolymer of Preparation Example 2, instead of the PEO-PDMS-PEO block copolymer of Example 1, and the second coating composition employs 3 g of the PDMS-PMMA block copolymer of Preparation Example 2, instead of the PEO-PDMS-PEO block copolymer.

### EXAMPLE 3

A plastic film was prepared in the same manner as in Example 1, with the exception that the first coating composition employs 2 g of the PMMA-PB-PS block copolymer of Preparation Example 3, instead of the PEO-PDMS-PEO block copolymer of Example 1, and the second coating composition employs 3 g of the PDMS-PB-PS block copolymer of Preparation Example 3, instead of the PEO-PDMS-PEO block copolymer.

### EXAMPLE 4

A plastic film was prepared in the same manner as in Example 1, with the exception that the first coating composition employs 2 g of the PEO-PPO-PEO block copolymer of Preparation Example 4, instead of the PEO-PDMS-PEO block copolymer of Example 1, and the second coating composition employs 3 g of the PEO-PPO-PEO block copolymer of Preparation Example 4, instead of the PEO-PDMS-PEO block copolymer.

### EXAMPLE 5

A plastic film was prepared in the same manner as in Example 1, with the exception that the first coating composition employs 2 g of the PMMA-PBA block copolymer of Preparation Example 5, instead of the PEO-PDMS-PEO block copolymer of Example 1, and the second coating composition employs 3 g of the PMMA-PBA block copolymer of Preparation Example 5, instead of the PEO-PDMS-PEO block copolymer.

### EXAMPLE 6

A coating composition was prepared by mixing 8 g of a trimethylolpropane triacrylate (TMPTA) composite in which silica nanoparticles with a particle size of 20 ∼ 30 nm were dispersed by 20 wt% (silica 1.6 g, TMPTA 6.4g), 2 g of the PEO-PDMS-PEO block copolymer of Preparation Example 1, 0.1 g of a photoinitiator (brand name: Irgacure 819), 0.1 g of a benzotriazole-based yellowing inhibitor (brand name: Tinuvin 400), 0.05 g of a fluorine surfactant (brand name: FC4430), and 2 g of methylethyl ketone.

The hard coating composition was applied onto both sides of a PET support substrate having a size of 15cm x 20cm and a thickness of 188 µm by bar coating. Then, the hard coating composition was photocured by passing the support substrate between ultraviolet (UV) illuminators, each of which was mounted with a metal halide lamp emitting a wavelength of 290 ∼ 320 nm under nitrogen atmosphere, to give a plastic film.

After completion of the photocuring, the hard coating layer on each side of the substrate was 80 µm thick.

### EXAMPLE 7

A plastic film was prepared in the same manner as in Example 6, with the exception that the PDMS-PMMA block copolymer of Preparation Example 2, instead of the PEO-PDMS-PEO block copolymer, was used in an amount of 2 g.

### EXAMPLE 8

A plastic film was prepared in the same manner as in Example 6, with the exception that the PMMA-PB-PS block copolymer of Preparation Example 3, instead of the PEO-PDMS-PEO block copolymer, was used in an amount of 2 g.

### EXAMPLE 9

A plastic film was prepared in the same manner as in Example 6, with the exception that the PEO-PPO-PEO block copolymer of Preparation Example 4, instead of the PEO-PDMS-PEO block copolymer, was used in an amount of 2 g.

### EXAMPLE 10

A plastic film was prepared in the same manner as in Example 6, with the exception that the PDMS-PMMA block copolymer of Preparation Example 6, instead of the PEO-PDMS-PEO block copolymer, was used in an amount of 2 g.

### COMPARATIVE EXAMPLE 1

A first coating composition was prepared by mixing 8 g of pentaerythritol tetraacrylate (PETA), 2 g of the PEO-PDMS-PEO block copolymer of Preparation Example 1, 0.1 g of a photoinititator (brand name: Irgacure 819), 0.1g of a benzotriazole-based yellowing inhibitor (brand name: Tinuvin 400), 0.05 g of a fluorine surfactant (brand name: F477), and 2 g of methylethyl ketone.

A second coating composition was prepared by mixing 10 g of pentaerythritol tetraacrylate (PETA), 0.1 g of a photoinitiator (brand name: Irgacure 819), 0.1 g of benzotriazole-based yellowing inhibitor (brand name: Tinuvin 400), 0.05 g of a fluorine surfactant (brand name: F477), and 2 g of methylethyl ketone.

The same subsequent procedure as in Example 1 was carried out to prepare a plastic film.

### COMPARATIVE EXAMPLE 2

A coating composition was prepared by mixing 10 g of a TMPTA composite in which nano-silica with a particle size of 20 ∼ 30nm was dispersed by approximately 20 wt % (silica 2g, TMPTA 8 g), 0.1 g of a photoinitiator (brand name: Irgacure 819), 0.1g of a benzotriazole-based yellowing inhibitor (brand name: Tinuvin 400), and 0.05 g of a fluorine surfactant (brand name: FC4430).

The same subsequent procedure as in Example 6 was carried out to prepare a plastic film.

### COMPARATIVE EXAMPLE 3

A coating composition was prepared by mixing 10 g of a PETA composite in which nano-silica with a particle size of 20 ∼ 30 nm was dispersed by approximately 20 wt % (silica 2g, PETA 8 g), 0.1 g of a photoinitiator (brand name: Irgacure 819), 0.1g of a benzotriazole-based yellowing inhibitor (brand name: Tinuvin 400), and 0.05 g of a fluorine surfactant (brand name: FC4430).

The same subsequent procedure as in Example 6 was carried out to prepare a plastic film.

### <TEST EXAMPLES>

### 1) Pencil hardness

Pencil hardness was evaluated according to the Japanese Standard JIS K5400. In this regard, the plastic film was doubly rubbed three times with a pencil hardness meter under a load of 1.0 kg to determine the hardness at which no scratches appeared.

### 2) Scratch resistance

The plastic film was doubly rubbed 400 times with a steel wool (#0000) under a load of 0.5 kg in a friction tester, and scratches thus formed were counted. Evaluation was made of the scratch resistance of the films by marking O for two or less scratches, Δ for two to less than five scratches, and x for five or more scratches.

### 3) Light resistance

Differences in color b* value of the plastic films were measured before and after exposure to UVB from UV lamp for 72 hrs.

### 4) Transmittance and haze

The plastic film was measured for transmittance and haze using a spectrophotometer (brand name: COH-400))

### 5) Curl property at high humidity and temperature

After a plastic film piece with dimensions of 10 cm x 10 cm was stored for 72 hrs in a chamber maintained at a temperature of 85°C and a humidity of 85%, it was placed on a flat plane. A maximal distance at which each edge of the piece was apart from the plane was measured.

### 6) Cylindrical bending test

Each of the plastic films was wound on a cylindrical mandrel having a diameter of 3 cm. When the plastic film was not cracked, it was evaluated as OK. If the plastic film was cracked, it was evaluated as X.

### 7) Impact resistance

The impact resistance of each of the plastic films was evaluated by determining whether or not each of the plastic films was cracked when a 22g steel ball was freely dropped 10 times thereon from a height of 50 cm. Each of the plastic films was evaluated as OK when it was not cracked, and as X when cracked.

The results of the physical properties measured in each of the plastic films are summarized in Table 1, below.

**TABLE 1**

| Ex. No. | Pencil hardness | Scratch resistance | Light resistance | Transmittance | Haze | Bending test | Curl property at high humid. & temp. | Impact resistance |
|---|---|---|---|---|---|---|---|---|
| Example1 | 8H | ○ | 0.19 | 92.0 | 0.3 | OK | 0.3mm | OK |
| Example 2 | 9H | ○ | 0.20 | 92.1 | 0.3 | OK | 0.2mm | OK |
| Example 3 | 9H | ○ | 0.22 | 92.2 | 0.2 | OK | 0.3mm | OK |
| Example 4 | 8H | ○ | 0.18 | 92.0 | 0.2 | OK | 0.2mm | OK |
| Example 5 | 9H | ○ | 0.21 | 92.1 | 0.4 | OK | 0.3mm | OK |
| Example 6 | 9H | ○ | 0.20 | 92.0 | 0.3 | OK | 0.2mm | OK |
| Example 7 | 9H | ○ | 0.25 | 92.3 | 0.2 | OK | 0.3mm | OK |
| Example 8 | 8H | ○ | 0.21 | 92.1 | 0.3 | OK | 0.2mm | OK |
| Example 9 | 8H | ○ | 0.21 | 92.2 | 0.3 | OK | 0.2mm | OK |
| Example 10 | 9H | ○ | 0.20 | 92.0 | 0.3 | OK | 0.3mm | Ok |
| Comparative Example 1 | 6H | ○ | 0.35 | 92.1 | 0.4 | OK | 0.3mm | X |
| Comparative Example 2 | 9H | ○ | 0.35 | 92.0 | 0.4 | X | 0.5mm | X |
| Comparative Example 3 | 9H | ○ | 0.30 | 92.3 | 0.3 | X | 0.3mm | X |

As shown in Table 1 above, all of the plastic films of the present invention exhibited good physical properties. In contrast, the film, prepared in Comparative Examples 1 to 3 was found to be insufficient in pencil hardness, bend resistance, or impact resistance,

## Claims

1. A coating composition, comprising a binder, an amphipathic block copolymer, an inorganic fine particle, a photoinitiator, and an organic solvent.

2. The coating composition of claim 1, wherein the binder includes a tri-to hexafunctional acrylate monomer.

3. The coating composition of claim 2, wherein the tri to hexafunctional acrylate monomer comprises at least one selected from the group consisting of trimethylolpropane triacrylate (TMPTA), trimethylolpropane ethoxy triacrylate (TMPEOTA), glycerin-propoxylated triacrylate (GPTA), pentaerythritol tetraacrylate (PETA), and dipentaerythritol hexaacrylate (DPHA)

4. The coating composition of claim 2, wherein the amphipathic block copolymer contains blocks that are respectively miscible and immiscible with the tri- to hexafunctional acrylate monomer within one molecule.

5. The coating composition of claim 4, wherein the miscible block comprises at least one selected from the group consisting of polyethylene oxide (PEO), polypropylene oxide (PPO), polymethyl acrylate (PMA), polymethyl methacrylate (PMMA), polycaprolactone (PCL), polystyrene (PS), and polyacrylic acid (PAA), and the immiscible block comprises at least one selected from the group consisting of polypropylene oxide (PPO), polybutylene oxide (PBO), polyhexilene oxide (PHO), polybutadiene (PB), polydimethyl siloxane (PDMS), polybutyl acrylate (PBA), and polyalkyl (meth)acrylate (PAMA) containing alkyl of 2 to 10 carbon atoms.

6. The coating composition of claim 1, wherein the amphipathic block copolymer is in a micelle form with a diameter of 100 nm.

7. The coating composition of claim 1, comprising the binder in an amount of 45 to 85 weight parts, the amphipathic block copolymer in an amount of 0.1 to 30 weight parts, the inorganic fine particle in an amount of 10 to 40 weight parts, and the photoinitiator in an amount of 0.5 to 10 weight parts, based on 100 weight part of the solid components comprising the binder, the amphipathic block copolymer, the inorganic fine particle, and the photoinitiator.

8. A plastic film, comprising:
a support substrate; and
a coating layer formed on at least one side of the support substrate, comprising a photocrosslinked copolymer, an inorganic fine particle dispersed in the photocrosslinked copolymer, and an amphipathic block copolymer.

9. The plastic film of claim 8, wherein the photocrosslinked copolymer is a crosslinked copolymer of tri- to hexafunctional acrylate monomers.

10. The plastic film of claim 9, wherein the amphipathic block copolymer contains blocks that are respectively miscible and immiscible with the tri- to hexafunctional acrylate monomers.

11. The plastic film of claim 10, wherein the miscible block comprises at least one selected from the group consisting of polyethylene oxide (PEO), polypropylene oxide (PPO), polymethyl acrylate (PMA), polymethyl methacrylate (PMMA), polycaprolactone (PCL), polystyrene (PS), and polyacrylic acid (PAA), and the immiscible block comprises at least one selected from the group consisting of polypropylene oxide (PPO), polybutylene oxide (PBO), polyhexilene oxide (PHO), polybutadiene (PB), polydimethyl siloxane (PDMS), polybutyl acrylate (PBA), and polyalkyl (meth)acrylate (PAMA) containing alkyl of 2 to 10 carbon atoms.

12. The plastic film of claim 8, wherein the amphipathic block copolymer is in a micelle form with a diameter of 100 nm.

13. The plastic film of claim 8, wherein the coating layer comprises a first coating layer formed on a front side of the support substrate and a second coating layer formed on a back side of the support substrate, the first coating layer comprising a photocrosslinked copolymer, an inorganic fine particle dispersed in the photocrosslinked copolymer, and an amphipathic block copolymer, the second coating layer comprising a photocrosslinked copolymer and an amphipathic block copolymer.

14. The plastic film of claim 8, wherein the coating layer has a thickness of 50 to 300 µm.

15. The plastic film of claim 8, exhibiting a pencil hardness of 7H or more at a load of 1 kg.

## Patentansprüche

1. Beschichtungszusammensetzung, umfassend ein Bindemittel, ein amphipathisches Block-Copolymer, ein anorganisches Feinteilchen, einen Photoinitiator und ein organisches Lösungsmittel.

2. Beschichtungszusammensetzung nach Anspruch 1, wobei das Bindemittel ein tri- bis hexa-funktionelles Acrylatmonomer einschließt.

3. Beschichtungszusammensetzung nach Anspruch 2, wobei das tri- bis hexafunktionelle Acrylatmonomer wenigstens eines umfasst, das ausgewählt ist aus der Gruppe bestehend aus Trimethylolpropantriacrylat (TMPTA), Trimethylolpropanethoxytriacrylat (TMPEOTA), Glycerin-propoxyliertem Triacrylat (GPTA), Pentaerythritoltetraacrylat (PETA) und Dipentaerythritolhexaacrylat (DPHA).

4. Beschichtungszusammensetzung nach Anspruch 2, wobei das amphipathische Block-Copolymer Blöcke enthält, die mischbar bzw. nicht mischbar mit dem tribis hexa-funktionellen Acrylatmonomer innerhalb eines Moleküls sind.

5. Beschichtungszusammensetzung nach Anspruch 4, wobei der mischbare Block wenigstens einen umfasst, der ausgewählt ist aus der Gruppe bestehend aus Polyethylenoxid (PEO), Polypropylenoxid (PPO), Polymethylacrylat (PMA), Polymethylmethacrylat (PMMA), Polycaprolacton (PCL), Polystyrol (PS) und Polyacrylsäure (PAA), und wobei der nicht mischbare Block wenigstens einen umfasst, der ausgewählt ist aus der Gruppe bestehend aus Polypropylenoxid (PPO), Polybutylenoxid (PBO), Polyhexilenoxid (PHO), Polybutadien (PB), Polydimethylsiloxan (PDMS), Polybutylacrylat (PBA) und Polyalkyl(meth)acrylat (PAMA) enthaltend Alkyl mit 2 bis 10 Kohlenstoffatomen.

6. Beschichtungszusammensetzung nach Anspruch 1, wobei das amphipathische Block-Copolymer in einer Micellform mit einem Durchmesser von 100 nm ist.

7. Beschichtungszusammensetzung nach Anspruch 1, umfassend das Bindemittel in einer Menge von 45 bis 85 Gewichtsteilen, das amphipathische Block-Copolymer in einer Menge von 0,1 bis 30 Gewichtsteilen, das anorganische Feinteilchen in einer Menge von 10 bis 40 Gewichtsteilen und den Photoinitiator in einer Menge von 0,5 bis 10 Gewichtsteilen, basierend auf 100 Gewichtsteilen der festen Komponenten umfassend das Bindemittel, das amphipathische Block-Copolymer, das anorganische Feinteilchen und den Photoinitiator.

8. Kunststofffilm, umfassend:
ein Trägersubstrat; und
eine Beschichtungsschicht, die auf wenigstens einer Seite des Trägersubstrats gebildet ist, umfassend ein photovernetztes Copolymer, ein in dem photovernetzten Copolymer dispergiertes anorganisches Feinteilchen und ein amphipathisches Block-Copolymer.

9. Kunststofffilm nach Anspruch 8, wobei das photovernetzte Copolymer ein vernetztes Copolymer aus tri- bis hexa-funktionellen Acrylatmonomeren ist.

10. Kunststofffilm nach Anspruch 9, wobei das amphipathische Block-Copolymer Blöcke enthält, die mischbar bzw. nicht mischbar mit den tri- bis hexa-funktionellen Acrylatmonomeren sind.

11. Kunststofffilm nach Anspruch 10, wobei der mischbare Block wenigstens einen umfasst, der ausgewählt ist aus der Gruppe bestehend aus Polyethylenoxid (PEO), Polypropylenoxid (PPO), Polymethylacrylat (PMA), Polymethylmethacrylat (PMMA), Polycaprolacton (PCL), Polystyrol (PS) und Polyacrylsäure (PAA), und wobei der nicht mischbare Block wenigstens einen umfasst, der ausgewählt ist aus der Gruppe bestehend aus Polypropylenoxid (PPO), Polybutylenoxid (PBO), Polyhexilenoxid (PHO), Polybutadien (PB), Polydimethylsiloxan (PDMS), Polybutylacrylat (PBA) und Polyalkyl(meth)acrylat (PAMA) enthaltend Alkyl mit 2 bis 10 Kohlenstoffatomen.

12. Kunststofffilm nach Anspruch 8, wobei das amphipathische Block-Copolymer in einer Micellform mit einem Durchmesser von 100 nm ist.

13. Kunststofffilm nach Anspruch 8, wobei die Beschichtungsschicht eine erste Beschichtungsschicht, gebildet auf einer Vorderseite des Trägersubstrats, und eine zweite Beschichtungsschicht, gebildet auf einer Rückseite des Trägersubstrats, umfasst, und wobei die erste Beschichtungsschicht ein photovernetztes Copolymer, ein in dem photovernetzten Copolymer dispergiertes anorganisches Feinteilchen und ein amphipathisches Block-Copolymer umfasst, und wobei die zweite Beschichtungsschicht ein photovernetztes Copolymer und ein amphipathisches Block-Copolymer umfasst.

14. Kunststofffilm nach Anspruch 8, wobei die Beschichtungsschicht eine Dicke von 50 bis 300 µm aufweist.

15. Kunststofffilm nach Anspruch 8, mit einer Bleistifthärte von 7 H oder höher bei einer Last von 1 kg.

## Revendications

1. Composition de revêtement comprenant un liant, un copolymère à blocs amphipathique, une particule inorganique fine, un photoamorceur et un solvant organique.

2. Composition de revêtement de la revendication 1, où le liant inclut un monomère acrylate tri- à hexafonctionnel.

3. Composition de revêtement de la revendication 2, où le monomère acrylate tri- à hexafonctionnel comprend un au moins sélectionné dans le groupe consistant en le triacrylate de triméthylolpropane (TMPTA), le triacrylate de triméthylolpropane éthoxylé (TMPEOTA), le triacrylate de glycéryle propoxylé (GPTA), le tétraacrylate de pentaérythritol (PETA) et l'hexaacrylate de dipentaérythritol (DPHA).

4. Composition de revêtement de la revendication 2, où le copolymère à blocs amphipathique contient des blocs qui sont miscibles et immiscibles, respectivement, au monomère acrylate tri- à hexafonctionnel dans une molécule.

5. Composition de revêtement de la revendication 4, où le bloc miscible comprend un au moins sélectionné dans le groupe consistant en le poly(oxyde d'éthylène) (PEO), le poly(oxyde de propylène) (PPO), le poly(acrylate de méthyle) (PMA), le poly(méthacrylate de méthyle) (PMMA), la polycaprolactone (PCL), le polystyrène (PS) et l'acide polyacrylique (PAA) et où le bloc immiscible comprend un au moins sélectionné dans le groupe consistant en le poly(oxyde de propylène) (PPO), le poly(oxyde de butylène) (PBO), le poly(oxyde d'hexylène) (PHO), le polybutadiène (PB), le polydiméthylsiloxane (PDMS), le poly(acrylate de butyle) (PBA) et des poly[(méth)acrylates d'alkyle] (PAMA) contenant un alkyle à 2 à 10 atomes de carbone.

6. Composition de revêtement de la revendication 1, où le copolymère à blocs amphipathique est sous la forme d'une micelle d'un diamètre de 100 nm.

7. Composition de revêtement de la revendication 1 comprenant le liant à une quantité de 45 à 85 parties en poids, le copolymère à blocs amphipathique à une quantité de 0,1 à 30 parties en poids, la particule inorganique fine à une quantité de 10 à 40 parties en poids et le photoamorceur à une quantité de 0,5 à 10 parties en poids pour 100 parties en poids des composants solides comprenant le liant, le copolymère à blocs amphipathique, la particule inorganique fine et le photoamorceur.

8. Film plastique comprenant :
un substrat support ; et
une couche de revêtement formée sur une face au moins du substrat support qui comprend un copolymère photoréticulé, une particule inorganique fine dispersée dans le copolymère photoréticulé et un copolymère à blocs amphipathique.

9. Film plastique de la revendication 8, où le copolymère photoréticulé est un copolymère réticulé de monomères acrylates tri- à hexafonctionnels.

10. Film plastique de la revendication 9, où le copolymère à blocs amphipathique contient des blocs qui sont miscibles et immiscibles, respectivement, aux monomères acrylates tri- à hexafonctionnels.

11. Film plastique de la revendication 10, où le bloc miscible comprend un au moins sélectionné dans le groupe consistant en le poly(oxyde d'éthylène) (PEO), le poly(oxyde de propylène) (PPO), le poly(acrylate de méthyle) (PMA), le poly(méthacrylate de méthyle) (PMMA), la polycaprolactone (PCL), le polystyrène (PS) et l'acide polyacrylique (PAA) et où le bloc immiscible comprend un au moins sélectionné dans le groupe consistant en le poly(oxyde de propylène) (PPO), le poly(oxyde de butylène) (PBO), le poly(oxyde d'hexylène) (PHO), le polybutadiène (PB), le polydiméthylsiloxane (PDMS), le poly(acrylate de butyle) (PBA) et des poly[(méth)acrylates d'alkyle] (PAMA) contenant un alkyle à 2 à 10 atomes de carbone.

12. Film plastique de la revendication 8, où le copolymère à blocs amphipathique est sous la forme d'une micelle d'un diamètre de 100 nm.

13. Film plastique de la revendication 8, où la couche de revêtement comprend une première couche de revêtement formée sur une face avant du substrat support et une deuxième couche de revêtement formée sur une face arrière du substrat support, la première couche de revêtement comprenant un copolymère photoréticulé, une particule inorganique fine dispersée dans le copolymère photoréticulé et un copolymère à blocs amphipathique et la deuxième couche de revêtement comprenant un copolymère photoréticulé et un copolymère à blocs amphipathique.

14. Film plastique de la revendication 8, où la couche de revêtement a une épaisseur qui va de 50 à 300 µm.

15. Film plastique de la revendication 8 qui présente une dureté au crayon de 7H ou plus à une charge de 1 kg.
